# EUROPEAN PATENT APPLICATION

(11) **EP 2 453 333 A1**
(43) Date of publication of application: **16.05.2012**
(21) Application number: 10191371.3
(22) Date of filing: 16.11.2010
(51) Int. Cl.: G05D 16/10

(54) **Valve apparatus including pressure-reducing valve**

(71) Applicant: Neriki Valve Co., Ltd., Amagasaki-shi Hyogo 661-0975 (JP)
(72) Inventor: Takeda, Masaru, Hyogo Hyogo (JP); Kagomoto, Mitsumasa, Hyogo Hyogo (JP); Oi, Akira, Hyogo Hyogo (JP)
(74) Representative: Fleuchaus, Michael A.

(57) **Abstract**

There is provided a valve apparatus in which a flow rate of taking-out gas is not lowered even if primary pressure is reduced, residual pressure can be secured in a gas container, a valve can easily be opened during a gas-charging operation, and reduced gas pressure can finely be controlled to predetermined secondary pressure. A pressure-reducing member (16) is biased in a valve-opening direction by a valve-opening spring (18). A pressure-receiving chamber (19) is formed on a side opposite from a pressure-reducing valve seat (15) across the pressure-reducing member (16), and the pressure-receiving chamber (19) is brought into communication with the outlet passage (11) through a pressure-reducing communication passage (20) which penetrates the pressure-reducing member (16). A residual pressure keeping valve box (24) is disposed in the outlet passage (11) so as to move toward and away from the pressure-reducing member (16). A closing operating portion (31) is provided on an outer surface of the residual pressure keeping valve box (24) so as to face the pressure-reducing communication passage (20). A return spring (34) is disposed between the residual pressure keeping valve box (24) and a housing (2), and the residual pressure keeping valve box (24) is biased toward a gas-taking out attitude (Y) which is separated from the pressure-reducing member (16). If the residual pressure keeping valve box (24) is switched to the gas charging attitude which is adjacent to the pressure-reducing member (16), the pressure-reducing communication passage (20) is closed by a closing operating portion (31).

## Description

### (1) Field of the Invention

The present invention relates to a valve apparatus including a pressure-reducing valve such as a valve apparatus for a gas container, and more particularly, to a valve apparatus including a pressure-reducing valve capable of preventing lowering of a flow rate of taking-out gas when primary pressure is reduced, capable of easily opening the valve by a simple operation when fresh gas is charged into the gas container although residual pressure of gas stored in the gas container can be secured, and capable of finely controlling reduced gas pressure to predetermined secondary pressure.

### (2) Description of Related Art

Conventionally, there have been proposed so-called always-closed type pressure-reducing valves in which pressure-reducing member is air-tightly and slidably inserted into the pressure-reducing valve chamber, a pressure-receiving chamber is formed on a side opposite from a pressure-reducing valve seat across the pressure-reducing member, the pressure-receiving chamber and an outlet passage are brought into communication with each other through a pressure-reducing communication passage which penetrates the pressure-reducing member, and the pressure-reducing member is biased toward the pressure-reducing valve seat by a valve-closing spring (see for example Japanese Unexamined Patent Publication No. 2002-049427, hereinafter, conventional art 1).

In conventional art 1, the pressure-reducing member moves toward and away from the pressure-reducing valve seat by a balance between a valve-opening force caused by pressure (primary pressure) of gas flowing from an inlet passage into the pressure-reducing valve chamber and a valve-closing force obtained by adding a biasing force of the valve-closing spring to gas pressure (secondary pressure) in the pressure-receiving chamber which is in communication with the outlet passage, and this reduces the primary pressure to predetermined secondary pressure. This secondary pressure is reduced as the primary pressure is reduced, and if the primary pressure becomes equal to or lower than a set pressure, the pressure-reducing member abuts against the pressure-reducing valve seat and closes by a biasing force of the valve-closing spring.

According to conventional art 1, since the pressure-reducing member closes when the primary pressure becomes equal to or lower than the set pressure, there is an advantage that it is unnecessary to separately provide a residual pressure keeping valve. In conventional art 1, however, if the primary pressure is reduced as the gas is consumed, not only the secondary pressure is reduced in accordance therewith, but also the pressure-reducing member approaches the pressure-reducing valve seat because the valve-opening force by the primary pressure is lowered, the flow rate of the taking-out gas is reduced, which causes a shortage of a supply amount of gas to gas consuming devices, and even if much stored gas remains in the gas container, usage of the gas container is completed at an early stage in some cases. Especially when the stored gas pressure increases, stored gas having higher pressure remains in the gas container which cannot be used due to reduction of the flow rate of the taking-out gas, and there is a problem that more stored gas is left unused and remains in the gas container.

On the other hand, there is an always-opened type pressure-reducing valve in which a pressure-reducing member is air-tightly and slidably inserted into a pressure-reducing valve chamber, a pressure-receiving chamber is formed on a side opposite from a pressure-reducing valve seat across the pressure-reducing member, the pressure-receiving chamber and an outlet passage are brought into communication with each other through a pressure-reducing communication passage which penetrates the pressure-reducing member, and the pressure-reducing member is biased by a valve-opening spring in a direction separating away from the pressure-reducing valve seat. In the case of the always-opened type pressure-reducing valve, since the pressure-reducing member is biased in an opening direction by the valve-opening spring, the pressure-reducing member does not excessively approach the pressure-reducing valve seat even if the primary pressure is reduced, and there is no adverse possibility that the flow rate of taking-out gas is excessively lowered.

However, in the case of the always-opened type pressure-reducing valve, if stored gas in the gas container is consumed and runs out, since the pressure-reducing member separates from the pressure-reducing valve seat by a biasing force of the valve-opening spring, it is necessary to provide a residual pressure keeping valve in the outlet passage. Since both the residual pressure keeping valve and the pressure-reducing valve close if downstream gas pressure is increased, in order to charge fresh gas into a vacant gas container from the outlet passage, it is necessary to forcibly open both the residual pressure keeping valve and the pressure-reducing valve, and there are problems that a charging passage must be prepared separately from the outlet passage, a structure of the entire valve apparatus becomes complicated, and the charging operation also becomes complicated.

To solve such problems, there is proposed a valve apparatus in which a residual pressure keeping valve is incorporated in the always-opened type pressure-reducing valve (see for example, Japanese Unexamined Patent Publication No. H09-170672, hereinafter, conventional art 2).

In conventional art 2, a piston member is air-tightly and slidably inserted into a pressure-reducing communication passage formed in the pressure-reducing member, a valve box of a residual pressure keeping valve is formed on a tip end of the piston member on a side of an outlet passage, a residual pressure keeping member is air-tightly and slidably inserted into the residual pressure keeping valve box, and a residual pressure keeping chamber is formed between the residual pressure keeping member and an inner surface of the residual pressure keeping valve box. A second end of the piston member on the opposite side from the outlet passage is opposed to an inner surface of a housing, a sealing portion which prevents the outlet passage and the pressure-receiving chamber from being brought into communication with each other is provided on the inner surface, the piston member is biased by a return spring toward the outlet passage, and in a state in which the piston member is separated from the sealing portion, the piston member is received by the pressure-reducing member.

In conventional art 2, if the residual pressure keeping member is pressed by a tip end of a charging jig inserted from the outlet passage when fresh gas is charged, the residual pressure keeping valve is forcibly opened, and the fresh gas is prevented from flowing into the residual pressure keeping chamber. The piston member is pressed through the residual pressure keeping member, the second end of the piston member abuts against the sealing portion, the pressure-reducing communication passage is shut off, and the pressure-reducing member is forcibly opened by a biasing force of the valve-opening spring. Therefore, it is possible to forcibly open the residual pressure keeping valve and the pressure-reducing valve by a simple operation, and fresh gas can be charged into a gas container.

According to the pressure-reducing valve of conventional art 2, it is necessary to air-tightly and slidably insert the piston member into the pressure-reducing communication passage, there is a problem that a large pressure-reducing member is required and the entire pressure-reducing valve is increased in size, and the pressure-reducing valve further has the following problem. That is, since the piston member biased by the return spring is supported by the pressure-reducing member, a basing force of the return spring is applied to the pressure-reducing member in a valve-closing direction through the piston member. As a result, there is a problem that the valve-opening force applied to the pressure-reducing member by the biasing force of the valve-opening spring is weakened by the biasing force of the return spring.

Further, a residual pressure keeping valve chamber is provided in a tip end of the piston member, and during a normal gas taking out operation, the residual pressure keeping valve opens by a balance between a pressure difference between upstream and downstream of the residual pressure keeping valve and a biasing force of the residual pressure keeping spring which is inserted into the residual pressure keeping valve chamber. Since the valve-opening force of the residual pressure keeping valve is received by the piston member, the valve-opening force of the residual pressure keeping valve also influences the pressure-reducing member which supports the piston member. As a result, in addition to the biasing force of the valve-opening spring, the biasing force of the return spring and the valve-opening force of the residual pressure keeping valve are also applied to the pressure-reducing member of conventional art 2. Therefore, it is not easy to set the valve-opening force and the valve-closing force applied to the pressure-reducing member, and it is not easy to finely control, to predetermined secondary pressure, the gas pressure reduced by the pressure-reducing valve.

### SUMMARY OF THE INVENTION

A technical object of the present invention is to solve the above problems, and to provide a valve apparatus including a pressure-reducing valve, the apparatus capable of preventing lowering of a flow rate of taking-out gas when primary pressure is reduced, capable of easily opening the valve by a simple operation when fresh gas is charged into the gas container although residual pressure of gas stored in the gas container can be secured, and capable of finely controlling reduced gas pressure to predetermined secondary pressure.

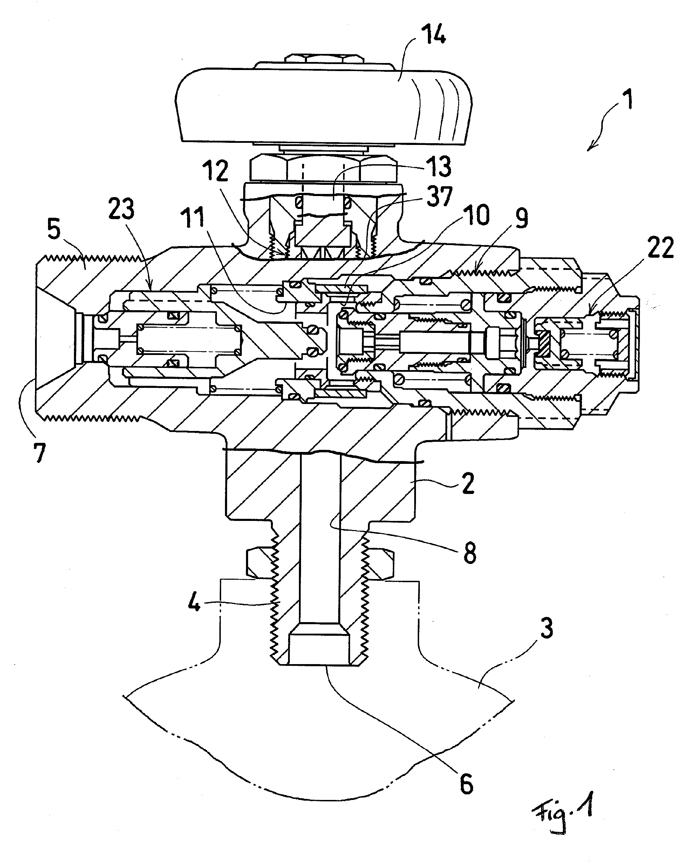

To solve the problems, for example, the present invention will be described based on Figs. 1 to 4 showing an embodiment, and is structured as follows.

That is, the present invention relates to a valve apparatus including a pressure-reducing valve, including: an inlet passage (8), a pressure-reducing valve chamber (10) and an outlet passage (11) being provided in this order in a housing (2); a pressure-reducing valve seat (15) being provided on a side of the outlet passage (11) of the pressure-reducing valve chamber (10); a pressure-reducing member (16) being air-tightly and slidably inserted into the pressure-reducing valve chamber (10) such that the pressure-reducing member (16) moves toward and away from the pressure-reducing valve seat (15), the pressure-reducing member (16) being biased by a valve-opening spring (18) in a direction separating away from the pressure-reducing valve seat (15); a pressure-receiving chamber (19) being formed on a side opposite from the pressure-reducing valve seat (15) across the pressure-reducing member (16); a pressure-reducing communication passage (20) that penetrates the pressure-reducing member (16), the outlet passage (11) being brought into communication with the pressure-receiving chamber (19) through the pressure-reducing communication passage (20), characterized in that a valve box (24) of a residual pressure keeping valve (23) is disposed in the outlet passage (11), a residual pressure keeping valve seat (25) is formed downstream of the residual pressure keeping valve box (24), a residual pressure keeping member (26) is air-tightly and slidably inserted into the residual pressure keeping valve box (24), the residual pressure keeping member (26) is biased by a residual pressure keeping spring (27) toward the residual pressure keeping valve seat (25), a residual pressure keeping chamber (28) is formed between the residual pressure keeping member (26) and an inner surface of the residual pressure keeping valve box (24), a residual pressure communication passage (29) is formed in the residual pressure keeping member (26), an outlet passage downstream portion (30) located downstream of the residual pressure keeping valve seat (25) is brought into communication with the residual pressure keeping chamber (28) through the residual pressure communication passage (29), a closing operating portion (31) is provided on an outer surface of the residual pressure keeping valve box (24) on a side of the pressure-reducing member (16), the closing operating portion (31) faces the pressure-reducing communication passage (20), the residual pressure keeping valve box (24) moves toward and away from the pressure-reducing member (16), and the residual pressure keeping valve box (24) is switched between a gas-taking out attitude (Y) in which the residual pressure keeping valve box (24) is separated from the pressure-reducing member (16) and received in an inner surface of the outlet passage (11) and a gas charging attitude (X) that is adjacent to the pressure-reducing member (16), a return spring (34) that biases the residual pressure keeping valve box (24) toward the gas-taking out attitude (Y) is disposed between the residual pressure keeping valve box (24) and a fixing portion of the housing (2), and the closing operating portion (31) closes the pressure-reducing communication passage (20) when the residual pressure keeping valve box (24) is switched to the gas charging attitude (X) against a biasing force of the return spring (34).

In a normal gas taking out state, the pressure-reducing member moves toward and away from the pressure-reducing valve seat by a balance between a valve-opening force caused by a biasing force of the valve-opening spring and a valve-closing force caused by the secondary pressure flowing into the pressure-receiving chamber and accordingly, pressure of gas which flowed from the inlet passage into the pressure-reducing valve chamber is reduced into predetermined secondary pressure, and the gas flows out from the outlet passage. At this time, the residual pressure keeping valve box is switched to the gas-taking out attitude by the biasing force of the return spring, and since the residual pressure keeping valve box and the return spring are separated from the pressure-reducing member, these members of the residual pressure keeping valve do not influence the operation of the pressure-reducing member.

Further, since the pressure-reducing member is biased by the valve-opening spring in a direction separating away from the pressure-reducing valve seat, even if pressure of gas flowing from the inlet passage into the pressure-reducing valve chamber, i.e., the primary pressure is reduced, the pressure-reducing member does not excessively approach the pressure-reducing valve seat, and gas stored in the gas container is taken out until the pressure thereof is sufficiently reduced.

If the stored gas is further consumed and the primary pressure is sufficiently reduced, even if the pressure-reducing member is sufficiently opened by the valve-opening spring, an amount of flow of the taking-out gas does not catch up the consumed amount of gas, and the secondary pressure is gradually reduced. If the secondary pressure becomes equal to or lower than predetermined pressure, the residual pressure keeping member closes the valve, the residual pressure keeping valve is closed and the outlet passage is shut off.

When high-pressure fresh gas is made to flow from the outlet passage and the gas is charged into the vacant gas container, charging hardware is provided in the housing, and for example, a pushing rod for opening the valve provided on the charging hardware is inserted into the outlet passage, the residual pressure keeping member is pressed by a tip end of the pushing rod and the valve is forcibly opened. If the residual pressure keeping member is pressed in the valve-opening direction, the residual pressure keeping valve box which supports the residual pressure keeping member moves toward the pressure-reducing member against a resilient force of the return spring, and the attitude is switched to the gas charging attitude. Accordingly, since the closing operating portion provided on the residual pressure keeping valve box closes the pressure-reducing communication passage, the fresh gas is prevented from flowing into the pressure-receiving chamber. As a result, since both the residual pressure keeping valve and the pressure-reducing valve are forcibly opened, the fresh gas is charged into the gas container through the outlet passage, the pressure-reducing valve chamber and the inlet passage in this order.

The closing operating portion is not limited to a special shape or structure as long as the closing operating portion can close the pressure-reducing communication passage when the residual pressure keeping valve box is switched to the gas charging attitude. For example, the closing operating portion can be constituted so as to project from the residual pressure keeping valve box toward the pressure-reducing member, and a sealing portion is formed on at least one of the closing operating portion and the pressure-reducing communication passage opposed to the closing operating portion.

A sealing area of an air-tightly sliding portion between the pressure-reducing member and the inner surface of the pressure-reducing valve seat may be different from a sealing area between the pressure-reducing valve seat and the pressure-reducing member. In this case, a valve-opening force or a valve-closing force is applied to the pressure-reducing member by the primary pressure applied to the area difference. According to the present invention, however, the sealing area of the air-tightly sliding portion between the pressure-reducing member and the inner surface of the pressure-reducing valve chamber is set substantially equal to the sealing area between the pressure-reducing valve seat and the pressure-reducing member. Influence of the primary pressure on the pressure-reducing member can be reduced or eliminated, and even if the primary pressure is reduced due to consumption of gas, the reduced gas pressure can be finely controlled to the secondary pressure and thus, this is more preferable.

Since the present invention is constituted as described above and has the above-described functions, the following effects can be obtained.
(1) Since the pressure-reducing member is biased by the valve-opening spring in a direction separating away from the pressure-reducing valve seat, even if the primary pressure is reduced, it is possible to prevent the flow rate of the taking-out gas from being lowered, and even if the storage pressure in the gas container is increased, it is possible to consume the gas until the amount of gas remaining in the gas container is sufficiently reduced.
(2) Since the residual pressure keeping valve is provided in the outlet passage, if the secondary pressure is sufficiently reduced, it is possible to shut off the outlet passage, predetermined remaining pressure can be secured in the gas container, and it is possible to prevent outside air from entering in the gas container.
(3) If the residual pressure keeping valve box disposed in the outlet passage is switched to the gas charging attitude, the pressure-reducing communication passage is closed by the closing operating portion provided on the residual pressure keeping valve box, and the pressure-reducing member is maintained in its opened state. Therefore, both the residual pressure keeping valve and the pressure-reducing valve can forcibly be opened by a simple operation, and fresh gas can easily be charged into the gas container.
(4) The return spring is provided between the fixing portion of the housing and the residual pressure keeping valve box, and the residual pressure keeping valve box is held in the housing in a normal gas-taking out state. Therefore, the operations of the return spring and the residual pressure keeping valve do not influence the operation of the pressure-reducing member, and it is possible to finely control the gas pressure reduced by the operation of the pressure-reducing member to predetermined secondary pressure.

### BRIEF DESCRIPTION OF THE DRAWINGS

Fig. 1 is a vertical sectional view of a valve apparatus for a gas container including a pressure-reducing valve according to an embodiment of the present invention;
Fig. 2 is a transverse plan view of the valve apparatus in a normal gas-taking out state according to the embodiment of the present invention;
Fig. 3 is a transverse plan view of the valve apparatus when gas consumption is completed according to the embodiment of the present invention; and
Fig. 4 is a transverse plan view of the valve apparatus when gas is charged according to the embodiment of the present invention.

### DETAILED DESCRIPTION OF PREFERRED EMBODIMENT

Hereinafter, a preferred embodiment of the present invention will be described with reference to the drawings.

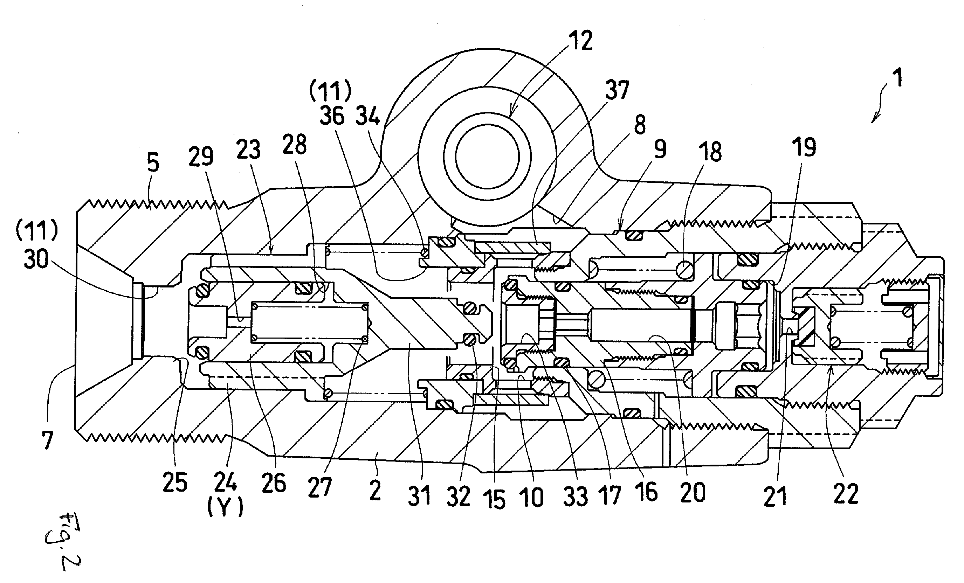

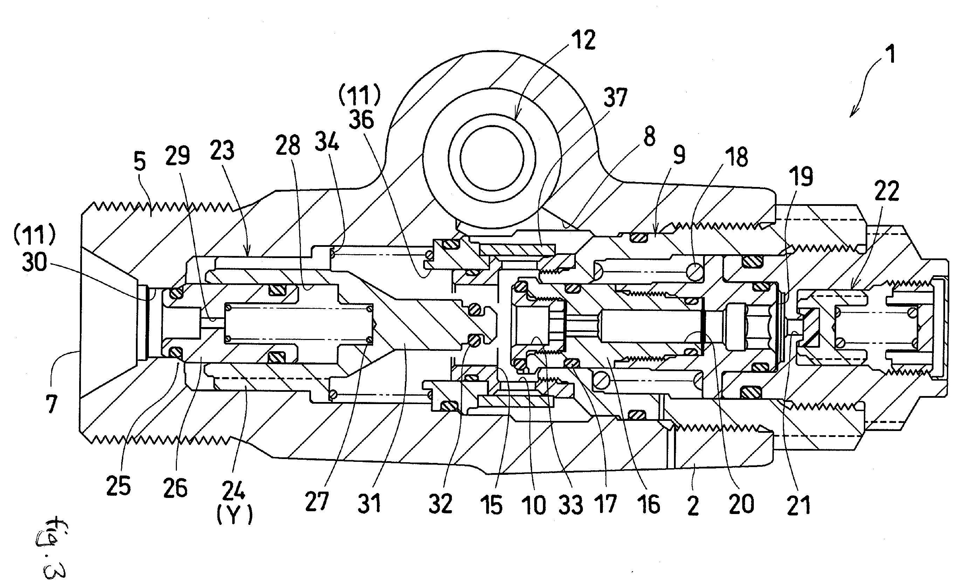

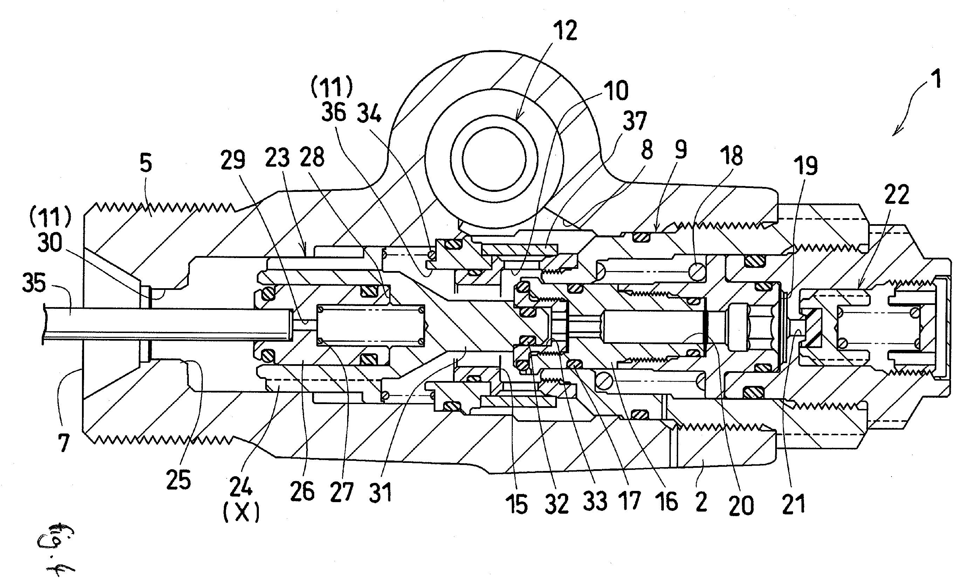

Figs. 1 to 4 show the embodiment of the present invention, where Fig. 1 is a vertical sectional view of a valve apparatus for a gas container including pressure-reducing valve, Fig. 2 is a transverse plan view of the valve apparatus in a normal gas-taking out state, Fig. 3 is a transverse plan view of the valve apparatus when gas consumption is completed, and Fig. 4 is a transverse plan view of the valve apparatus when gas is charged.

As shown in Fig. 1, a valve apparatus (1) for a gas container (3) has a leg screw (4) connected to the gas container (3) and formed on a lower portion of a housing (2), and an outlet nozzle (5) projects on one of side surfaces of an intermediate portion of the housing (2) in the vertical direction. A gas inlet (6) opens at a lower surface of the leg screw (4) such that the gas inlet (6) faces an inner space of the gas container (3), and a gas outlet (7) opens at an end surface of the outlet nozzle (5).

An inlet passage (8), a pressure-reducing valve chamber (10) of a pressure-reducing valve (9) and an outlet passage (11) are formed between the gas inlet (6) and the gas outlet (7) in this order in the housing (2). A main stop valve (12) is provided in an intermediate portion of the inlet passage (8). An operation handle (14) which cooperates with the main stop valve (12) through a spindle (13) is provided on an upper portion of the housing (2). In this embodiment, a cylindrical filter (37) is disposed at an inlet of the pressure-reducing valve chamber (10). In the present invention, the filter (37) may be disposed at another portion such as the inlet passage (8) in the leg screw (4) near the gas inlet (6).

As shown in Fig. 2, a pressure-reducing valve seat (15) is formed on the pressure-reducing valve chamber (10) around an open end of the outlet passage (11) which opens at the pressure-reducing valve chamber (10). The pressure-reducing member (16) is inserted into the pressure-reducing valve chamber (10) such that the pressure-reducing member (16) can air-tightly and slidably move toward and away from the pressure-reducing valve seat (15). A sealing area of an air-tightly sliding portion (17) between the pressure-reducing member (16) and an inner surface of the pressure-reducing valve chamber (10) is set substantially equal to a sealing area between the pressure-reducing valve seat (15) and the pressure-reducing member (16).

A valve-opening spring (18) is disposed between the pressure-reducing member (16) and the housing (2), and the pressure-reducing member (16) is biased by a resilient force of the valve-opening spring (18) in a direction separating away from the pressure-reducing valve seat (15). One end of the pressure-reducing member (16) faces the outlet passage (11), and a pressure-receiving chamber (19) is formed between the other end and the housing (2). That is, the pressure-receiving chamber (19) is formed on a side opposite from the pressure-reducing valve seat (15) across the pressure-reducing member (16). A pressure-reducing communication passage (20) penetrates the pressure-reducing member (16) from the one end to the other end. Therefore, the outlet passage (11) is in communication with the pressure-receiving chamber (19) through the pressure-reducing communication passage (20). A gas releasing passage (21) is formed in a wall surface of the housing (2) facing the pressure-receiving chamber (19), and the gas releasing passage (21) is sealed by a secondary safety valve (22).

A valve box (24) of the residual pressure keeping valve (23) is disposed in the outlet passage (11), and a residual pressure keeping valve seat (25) is formed downstream of the residual pressure keeping valve box (24). A residual pressure keeping member (26) is air-tightly and slidably inserted into the residual pressure keeping valve box (24). The residual pressure keeping member (26) is biased by the residual pressure keeping spring (27) toward the residual pressure keeping valve seat (25). A residual pressure keeping chamber (28) is formed between the residual pressure keeping member (26) and an inner surface of the residual pressure keeping valve box (24). A residual pressure communication passage (29) penetrates the residual pressure keeping member (26), and an outlet passage downstream portion (30) located downstream of the residual pressure keeping valve seat (25) is in communication with the residual pressure keeping chamber (28) through the residual pressure communication passage (29).

A rod-like closing operating portion (31) projects from an outer surface of the residual pressure keeping valve box (24) on the side of the pressure-reducing member (16), and the sealing portion (32) is formed on a peripheral surface of a tip end of the closing operating portion (31). A fitting portion (33) into which the sealing portion (32) is air-tightly inserted is formed in the pressure-reducing communication passage (20) of the pressure-reducing member (16) which is opposed to the closing operating portion (31).

The residual pressure keeping valve box (24) can move toward and away from the pressure-reducing member (16) in the outlet passage (11), and the residual pressure keeping valve box (24) can be switched between a gas-taking out attitude (Y) in which the residual pressure keeping valve box (24) separates from the pressure-reducing member (16) and is received in an inner surface of the outlet passage (11) and a gas charging attitude (X) in which the residual pressure keeping valve box (24) is adjacent to the pressure-reducing member (16) as shown in Fig. 4. A return spring (34) is disposed between the residual pressure keeping valve box (24) and a fixing portion of the housing (2), and the residual pressure keeping valve box (24) is biased toward the gas-taking out attitude (Y) by a resilient force of the return spring (34).

As shown in Fig. 2, if the residual pressure keeping valve box (24) is switched to the gas-taking out attitude (Y), a tip end of the closing operating portion (31) is separated from the pressure-reducing member (16). If the residual pressure keeping valve box (24) is switched to the gas charging attitude (X) as shown in Fig. 4, the pressure-reducing member (16) is pressed in the valve-opening direction by the closing operating portion (31), the sealing portion (32) is air-tightly inserted into the fitting portion (33) and the pressure-reducing communication passage (20) is closed.

Next, the operation of the pressure-reducing valve having the residual pressure keeping valve will be described.

If the main stop valve (12) opens, stored gas in the gas container (3) flows into the pressure-reducing valve chamber (10) through the inlet passage (8). Since the sealing area of the air-tightly sliding portion (17) between the pressure-reducing member (16) inserted into the pressure-reducing valve chamber (10) and the inner surface of the pressure-reducing valve chamber (10) is set substantially equal to the sealing area between the pressure-reducing valve seat (15) and the pressure-reducing member (16), the pressure-reducing member (16) is not biased in any of the valve-opening direction and valve-closing direction under pressure of gas which flowed into the pressure-reducing valve chamber (10). However, the pressure-reducing member (16) is separated from the pressure-reducing valve seat (15) by a biasing force of the valve-opening spring (18) as shown in Fig. 2, gas which flowed into the pressure-reducing valve chamber (10) flows out to the outlet passage (11) from a space between the pressure-reducing member (16) and the pressure-reducing valve seat (15).

Since the residual pressure keeping valve box (24) disposed in the outlet passage (11) is switched to the gas-taking out attitude (Y) by the biasing force of the return spring (34), the closing operating portion (31) is separated from the pressure-reducing member (16), and the outlet passage (11) is in communication with the pressure-receiving chamber (19) through the pressure-reducing communication passage (20). Therefore, pressure of gas which flowed out to the outlet passage (11), i.e., secondary pressure is transmitted to the pressure-receiving chamber (19) through the pressure-reducing communication passage (20), and the pressure-reducing member (16) is pressed toward the pressure-reducing valve seat (15) by the pressure in the pressure-receiving chamber (19). Accordingly, the pressure-reducing member (16) moves toward and away from the pressure-reducing valve seat (15) by a balance between the secondary pressure in the pressure-receiving chamber (19) and the biasing force of the valve-opening spring (18), and gas which flowed into the pressure-reducing valve chamber (10) is reduced by predetermined secondary pressure and flows out into the outlet passage (11).

The gas which flowed out into the outlet passage (11) flows around the residual pressure keeping valve box (24) and reaches a periphery of the residual pressure keeping member (26), and presses the residual pressure keeping member (26) in a direction separating away from the residual pressure keeping valve seat (25) against a biasing force of the residual pressure keeping spring (27). Gas pressure in the outlet passage downstream portion (30) is transmitted to the residual pressure keeping chamber (28) and biases the residual pressure keeping member (26) in the valve-closing direction. However, when a difference between gas pressure in an outlet passage upstream portion (36) located upstream of the residual pressure keeping valve seat (25) and gas pressure in the outlet passage downstream portion (30) is higher than predetermined pressure, the residual pressure keeping member (26) is maintained in its valve-opening state against the biasing force of the residual pressure keeping spring (27) by the pressure difference. This gas is taken out from the gas outlet (7) through the outlet passage downstream portion (30) from a space between the residual pressure keeping member (26) and the residual pressure keeping valve seat (25), and the gas is supplied to a gas-consuming device (not shown) connected to the outlet nozzle (5).

If the stored gas is consumed, gas pressure flowing into the pressure-reducing valve chamber (10), i.e., primary pressure is reduced. However, since a force in the valve-opening direction applied by the primary pressure and a force in the valve-closing direction are substantially equal to each other, even if the primary pressure is reduced, this does not influence the operation of the pressure-reducing member (16) when sufficient stored gas remains in the gas container, and gas pressure flowing out into the outlet passage (11) is finely maintained at the predetermined secondary pressure.

Consumption of the stored gas is continued and if the gas container (3) becomes almost empty, a gas amount required by the gas-consuming device cannot sufficiently be taken out, and gas pressure flowing out into the outlet passage (11) is reduced. If the pressure difference between the secondary pressure in the outlet passage (11) and the pressure in the outlet passage downstream portion (30) becomes equal to or lower than the predetermined pressure, the residual pressure keeping member (26) moves toward the residual pressure keeping valve seat (25) by a biasing force of the residual pressure keeping spring (27) against the valve-opening force by the pressure difference, the residual pressure keeping valve (23) closes and the outlet passage (11) is shut off as shown in Fig. 3. Accordingly, the gas taking out operation from the gas container (3) is completed, it is determined that the gas container (3) becomes empty and the main stop valve (12) is closed in a state in which the residual pressure is kept.

If back pressure is applied from the gas outlet (7) to the outlet passage downstream portion (30) due to any abnormal condition, the pressure is transmitted to the residual pressure keeping chamber (28), the residual pressure keeping member (26) moves toward the residual pressure keeping valve seat (25) against the valve-opening force of the gas pressure of the outlet passage upstream portion (36) by the gas pressure of the residual pressure keeping chamber (28) and the biasing force of the residual pressure keeping spring (27), and the residual pressure keeping valve (23) is closed. This prevents backflow gas from flowing from the outlet passage (11) into the gas container (3) through the inlet passage (8).

When fresh gas is charged into the empty gas container (3), a charging hardware (not shown) is connected to the outlet nozzle (5). The charging hardware include a pushing rod (35), and if the charging hardware is connected as shown in Fig. 4, the pushing rod (35) is inserted into the outlet passage downstream portion (30), the residual pressure keeping member (26) is pressed and the valve is forcibly opened. If the residual pressure keeping member (26) is pressed in the valve-opening direction, the residual pressure keeping valve box (24) which supports the residual pressure keeping member (26) moves toward the pressure-reducing member (16) against the resilient force of the return spring (34), and the attitude is switched to the gas charging attitude (X). Accordingly, the pressure-reducing member (16) is pressed in the valve-opening direction, the sealing portion (32) of the closing operating portion (31) provided in the residual pressure keeping valve box (24) is air-tightly inserted into the fitting portion (33), and the pressure-reducing communication passage (20) is closed.

If high-pressure fresh gas is charged from the gas outlet (7) in this state, the fresh gas flows into the pressure-reducing valve chamber (10) through the outlet passage (11), and the fresh gas is guided from the inlet passage (8) into the gas container (3) and charged. At this time, since the pressure-reducing communication passage (20) is closed, the fresh gas does not flow into the pressure-receiving chamber (19), and since the pressure-reducing member (16) is maintained at the valve-opening state, the fresh gas is smoothly charged. The high-pressure fresh gas does not flow into the gas releasing passage (21) which is in communication with the pressure-reducing member (16), and the secondary safety valve (22) does not erroneously open.

The valve apparatus having the pressure-reducing valve described in the above embodiment is shown for making the technical idea of the present invention concrete, the shapes and dispositions of the members are not limited to those of the embodiment, and can be variously changed within a range of claims of the present invention.

For example, although the sealing portion (32) is provided on the outer periphery of the tip end of the closing operating portion (31) in the above-described embodiment, in the present invention, the sealing portion may be disposed around an open end of the pressure-reducing communication passage, and a tip end of the closing operating portion may be abutted thereto.

In the above-described embodiment, the gas releasing passage is provided in the peripheral wall of the pressure-receiving chamber and the secondary safety valve is disposed in the gas releasing passage, and the residual pressure keeping valve, the pressure-reducing valve and the safety valve are disposed straightly. This is preferable because the entire valve apparatus can be made compact. However, it is also possible to provide the secondary safety valve at another portion which is in communication with the outlet passage.

The valve apparatus including a pressure-reducing valve according to the present invention is capable of preventing lowering of a flow rate of taking-out gas when primary pressure is reduced, capable of easily opening the valve by a simple operation when fresh gas is charged into the gas container although residual pressure of gas stored in the gas container can be secured, and capable of finely controlling reduced gas pressure to predetermined secondary pressure. Therefore, the present invention is particularly suitable for a pressure-reducing valve which is incorporated in a valve apparatus for a gas container, and can also be applied to other valve apparatus provided in an intermediate portion of a pipe.

## Claims

1. A valve apparatus including a pressure-reducing valve, comprising:
an inlet passage (8), a pressure-reducing valve chamber (10) and an outlet passage (11) being provided in this order in a housing (2);
a pressure-reducing valve seat (15) being provided on a side of the outlet passage (11) of the pressure-reducing valve chamber (10);
a pressure-reducing member (16) being air-tightly and slidably inserted into the pressure-reducing valve chamber (10) such that the pressure-reducing member (16) moves toward and away from the pressure-reducing valve seat (15), the pressure-reducing member (16) being biased by a valve-opening spring (18) in a direction separating away from the pressure-reducing valve seat (15);
a pressure-receiving chamber (19) being formed on a side opposite from the pressure-reducing valve seat (15) across the pressure-reducing member (16);
a pressure-reducing communication passage (20) that penetrates the pressure-reducing member (16), the outlet passage (11) being brought into communication with the pressure-receiving chamber (19) through the pressure-reducing communication passage (20), **characterized in that**
a valve box (24) of a residual pressure keeping valve (23) is disposed in the outlet passage (11), a residual pressure keeping valve seat (25) is formed downstream of the residual pressure keeping valve box (24),
a residual pressure keeping member (26) is air-tightly and slidably inserted into the residual pressure keeping valve box (24), the residual pressure keeping member (26) is biased by a residual pressure keeping spring (27) toward the residual pressure keeping valve seat (25),
a residual pressure keeping chamber (28) is formed between the residual pressure keeping member (26) and an inner surface of the residual pressure keeping valve box (24),
a residual pressure communication passage (29) is formed in the residual pressure keeping member (26), an outlet passage downstream portion (30) located downstream of the residual pressure keeping valve seat (25) is brought into communication with the residual pressure keeping chamber (28) through the residual pressure communication passage (29),
a closing operating portion (31) is provided on an outer surface of the residual pressure keeping valve box (24) on a side of the pressure-reducing member (16), the closing operating portion (31) faces the pressure-reducing communication passage (20),
the residual pressure keeping valve box (24) moves toward and away from the pressure-reducing member (16), and the residual pressure keeping valve box (24) is switched between a gas-taking out attitude (Y) in which the residual pressure keeping valve box (24) is separated from the pressure-reducing member (16) and received in an inner surface of the outlet passage (11) and a gas charging attitude (X) that is adjacent to the pressure-reducing member (16),
a return spring (34) that biases the residual pressure keeping valve box (24) toward the gas-taking out attitude (Y) is disposed between the residual pressure keeping valve box (24) and a fixing portion of the housing (2), and
the closing operating portion (31) closes the pressure-reducing communication passage (20) when the residual pressure keeping valve box (24) is switched to the gas charging attitude (X) against a biasing force of the return spring (34).

2. The valve apparatus including a pressure-reducing valve according to claim 1, **characterized in that** the closing operating portion (31) projects from the residual pressure keeping valve box (24) toward the pressure-reducing member (16), and a sealing portion (32) is formed in at least one of the closing operating portion (31) and the pressure-reducing communication passage (20) that is opposed to the closing operating portion (31).

3. The valve apparatus including a pressure-reducing valve according to claim 1 or 2, **characterized in that** a sealing area of an air-tightly sliding portion (17) between the pressure-reducing member (16) and an inner surface of the pressure-reducing valve chamber (10) is set substantially equal to a sealing area between the pressure-reducing valve seat (15) and the pressure-reducing member (16).
